Europäisches Patentamt

European Patent Office

Office européen des brevets

(11) Publication number: **0 007 220**
A1

# EUROPEAN PATENT APPLICATION

(21) Application number: 79301336.8

(22) Date of filing: 09.07.79

(51) Int. Cl.³: **B 65 G 27/32**
**B 06 B 1/10**

(30) Priority: 12.07.78 IL 55122

(43) Date of publication of application:
23.01.80 Bulletin 80/2

(84) Designated Contracting States:
DE FR GB IT

(71) Applicant: POPPER ENGINEERING LTD.
6, Ranas Street
Kyriat Motzkin(IL)

(72) Inventor: Popper, Jakhin Boas
6 Ranas Street
Kyriat Motzkin(IL)

(74) Representative: Baillie, Iain Cameron et al,
c/o Ladas, Parry, von Gehr. Goldsmith & Deschamps
Blumenstrasse 48
D-8000 München 2(DE)

(54) Vibrating systems.

(57) A vibrating system comprising a driven mass m arranged for vibratory motion along a travel axis; at least one spring of spring constant k coupling the driven mass to a location and extending along a spring axis; means for applying a driving force F to said driven mass along a driving axis; the angular relationships between the at least one spring axis, the second and travel axes and the spring constants Ki being determined in accordance with a specified expression.

Fig. 1

EP 0 007 220 A1

- 1 -

## Vibrating systems

The present invention relates to vibrating systems and more particularly to spring-mounted vibrating systems.

Vibrating systems such as vibrating tables or screens are conventionally constructed to vibrate along a predetermined axis. Normally, a change in the angle of vibration requires a major realignment of the vibrating system drive which may or may not be possible in a given structural environment.

In conventional vibrating systems, the drive normally vibrates along the same axis as does the vibrated element. This conventional on-axis type drive imposes severe design limitations.

The present invention seeks to overcome the aforesaid limitations in prior art conventional vibrating systems and provides a spring-mounted vibrating system in which the vibration of the drive need not be on-axis with the intended axis of system vibration. Furthermore in accordance with an embodiment of the present invention the angular separation between the drive axis and the driven axis may be determined within given limits by suitable selection of the spring constants and angular orientation of springs in the system.

There is thus provided in accordance with an embodiment of the invention a vibrating system comprising:

a driven mass arranged for vibratory motion along a travel axis;

at least one spring of spring constant k coupling said driven mass to a location and extending along a spring axis;

means for applying a driving force F to said driven mass along a driving axis;

the angular relationships between said at least one spring axis, said second and travel axes and the spring constants $k_i$ being determined in accordance with the following expression:

$$\tan \alpha = \frac{\sum \dfrac{T_i \, k_i}{1 + T_i{}^2}}{m\omega^2 - \sum \dfrac{T_i{}^2 \, k_i}{1 + T_i{}^2}} \qquad (1)$$

where $\alpha$ is the nagle between said travel axis and said driving axis;

$\gamma_i$ is the angle between said driving axis and a spring axis of index i measured in a uniform direction;

$\omega$ is the angular frequency of the reciprocating force F;

$k_i$ is the spring constant of a first spring of index i;

$T_i$ is the equal to tan $\gamma_i$.

The summation is executed over all of the springs in the system that hold the mass m.

Further in accordance with an embodiment of the invention the amplitude of vibration is given by the following expression:

$$A = \frac{F}{m\omega^2 \cos\alpha} \times \frac{1}{1- \left\{ \tan\alpha \sum \left[ \frac{k_i}{m^2} \frac{T_i}{1 + T_i^2} \right] + \sum \left[ \frac{k_i}{m^2} \frac{1}{1 + T_i^2} \right] \right\}} \cdot (2)$$

Additionally in accordance with an embodiment of the invention there is provided a reversing conveyor comprising the vibrating system described hereinabove wherein said driven mass includes a conveyor surface and also comprising means for varying the orientation of at least one spring axis from a first orientation producing conveying along said surface in a first direction by vibration of said conveyor surface along a first travel axis to a second orientation producing conveying along said surface in a second direction by vibration of said conveyor surface along a second travel axis.

Additionally in accordance with an embodiment of the invention systems producing elliptic motion are provided by combining two vibrating systems of the type described hereinabove such that their respective travel axes are angled with respect to each other.

Conveyors may be constructed using vibrating systems which produce elliptic motion.

There is also provided in accordance with an embodiment of the invention a conveyor system operating in elliptic motion and comprising a source of eccentric motion, a conveyor surface and Kappa spring means (as described in Israel Patent Application 49583) coupling said source of eccentric motion to said conveyor surface, said Kappa spring means being characterized in providing high amplitude transmission of force along a first axis and low amplitude transmission of force along axes perpendicular thereto.

It is a particular feature of the invention that the constructional parameters appearing in equations 1 and 2 may be readily selected such that an increase in m, for example, increased conveyor load, provides a smaller α. Furthermore an increase in m provides increased amplitude of vibration.  These characteristics are desirable in order to provide efficient conveying with a varying load.

The invention will be more fully understood and appreciated from the following detailed description taken in conjunction with the drawings in which:

Fig. 1 is a schematic illustration of a spring mounted vibrating system constructed and operative in accordance with an embodiment of the invention;

Fig. 2 is a schematic illustration of an alternative type of spring mounted vibrating system;

Fig. 3 is a schematic illustration of still another alternative type of spring mounted vibrating system;

Fig. 4 is a schematic illustration of a spring mounted vibrating system producing rotational motion;

Fig. 5A is a schematic illustration of a conveyor including a vibrating system constructed and operative in accordance with an embodiment of the invention;

Fig. 5B is a schematic illustration of a conveyor including a vibrating system constructed and operative in accordance with an alternative embodiment of the invention;

Fig. 6 is a schematic illustration of a reversible conveyor constructed and operative in accordance with an embodiment of the invention;

0007220

Fig. 7 is a schematic illustration of a reversible conveyor constructed and operative in accordance with an alternative embodiment of the invention;

Fig. 8A is a schematic illustration of a reversible conveyor arranged for operation in a first direction;

Fig. 8B is a schematic illustration of the reversible conveyor of Fig. 8A arranged for operation in a second direction;

Fig. 9 is a schematic illustration of a reversible conveyor constructed and operative in accordance with yet another alternative embodiment of the invention;

Fig. 10 is a schematic illustration of a vibrating conveyor constructed and operative in accordance with an embodiment of the invention;

Fig. 11 is a schematic illustration of bridge-breaking apparatus constructed and operative in accordance with an embodiment of the invention; and

Fig. 12 is a schematic illustration of an elliptic motion conveyor employing Kappa springs.

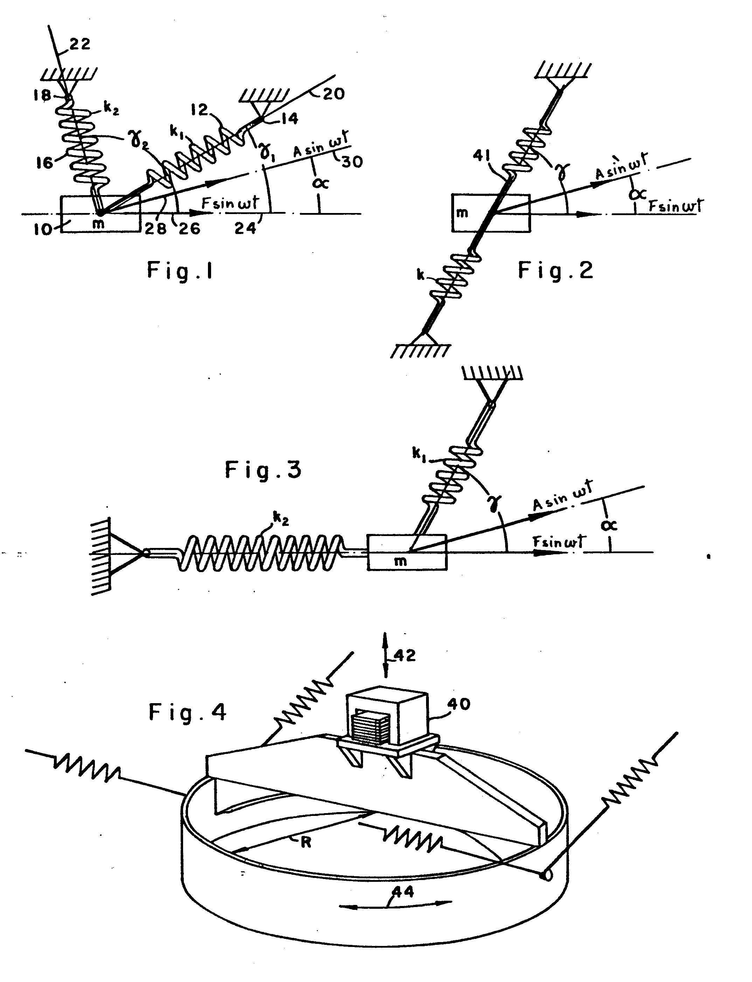

Reference is now made to Fig. 1 which illustrates a spring-mounted vibrating system constructed and operative in accordance with an embodiment of the present invention. A mass 10 is supported on a first spring 12 of spring constant $k_1$, one end of the spring being attached to mass 10 and the other end of the spring being attached to a fixed location 14. Mass 10 is also supported on a second spring 16, of spring constant $k_2$, one of whose ends is attached to mass 10 and the other of whose ends is attached to a fixed location 18. Springs 12 and 16 are arranged along respective axes 20 and 22. The location and angular orientation of axes 20 and 22 are assumed, for the purposes of the calculations which follow, to remain constant.  This is a good approximation for relatively long springs, such as the springs whose use is envisioned herein.

A reciprocating force Fssin ωt is applied to mass 10 along a driving axis 24 and in a direction indicated by arrow 26.  It has been found experimentally and calculated theoretically that the resultant motion of the mass 10 is expressed by A sin ωt and is directed in a direction 28 along a travel axis 30.  The angular separation between axis 30 and axis 24 is α where

$$\tan \alpha = \frac{\dfrac{1}{m\omega^2}\left[ k_1 \dfrac{T_1}{1 + T_1^2} - k_2 \dfrac{T_2}{1 + T_2^2}\right]}{\dfrac{1}{m\omega^2}\left[ k_1 \dfrac{T_1^2}{1 + T_1^2} + k_2 \dfrac{T_2^2}{1 + T_2^2}\right] - 1} \qquad (3)$$

where α is the angle between axis 30 and axis 24;

$\gamma_1$ is the angle between axis 24 and axis 20;

$\gamma_2$ is the angle between axis 24 and axis 22;

ω is the frequency of the reciprocating force F;

$_1$ equals tan $\gamma_1$;

$_2$ equals tan $\gamma_2$.

The amplitude A is given by the following expression:

$$A = \frac{F}{m\omega^2 \cos\alpha} \frac{1}{\dfrac{1}{m\omega^2}\left[ k_1 \dfrac{1+T_1\tan\alpha}{1 + T_1^2} + k_2 \dfrac{1-T_2\tan\alpha}{1 + T_2^2}\right] - 1} \qquad (4)$$

- 7 -

The above equations may be generalized for the case of n springs each of spring constant $k_i$ and disposed along a spring axis forming an angle $\gamma_i$ with the driving axis.

The generalized equations are as follows:

$$\tan \alpha = \frac{\sum \dfrac{T_i\, k_i}{1 + T_i^{\,2}}}{m\omega^2 - \sum \dfrac{T_i^{\,2}\, k_i}{1 + T_i^{\,2}}}$$

where $\alpha$ is the angle between said travel axis and said driving axis;

$\gamma_i$ is the angle between said driving axis and a spring axis of index i measured in a uniform direction;

$\omega$ is the frequency of the reciprocating force F;

$_i$ is the spring constant of a first spring of index i;

$_i$ is equal to $\tan\gamma_i$.

and

$$A = \frac{F}{m\omega^2 \cos\alpha} \times \frac{1}{1 - \left\{ \tan\alpha \sum \left[ \dfrac{k_i}{m\omega^2} \dfrac{T_i}{1 + T_i^{\,2}} \right] + \sum \left[ \dfrac{k_i}{m\omega^2} \dfrac{T_2}{1 + T_i^{\,2}} \right] \right\}}$$

It is noted that where F is produced by rotation of weights, of total mass $\mu$ at a radius r, then $R = r\mu\omega^2$ and m includes $\mu$.

The above equations are simplified for various special cases. An important case is that wherein it is desired that $\alpha = 90°$ with two springs. In this case equation 1 above degenerates to:

$$\frac{1}{m\omega^2}\left[k_1 \frac{T_1^2}{1 + T_1^2} + k_2 \frac{T_2^2}{1 + T_2^2}\right] = 1 \qquad (5)$$

and the amplitude A is then given by:

$$A = \frac{F}{k_1 \dfrac{T_1}{1 + T_1^2} - k_2 \dfrac{T_2}{1 + T_2^2}} \qquad (6)$$

Reference is now made to Fig. 2 which illustrates a spring mounted vibrating system in which a mass 40 is mounted at the center of a spring 41 defined along an axis 44. In other terms, the system can be considered to comprise first and second identical springs of the combined spring constant k which extend along the same axis. In this case equations (1) and (2) degenerate to the following equations:

$$\tan \alpha = \frac{Tk/m\omega^2}{1 + T^2 (1 - k/m\omega^2)} \qquad (7)$$

$$A = \frac{F}{m\omega^2 \sin\alpha} \cdot \frac{T}{1 - T/\tan\alpha} \qquad (8)$$

According to an alternative embodiment of the invention mass 40 need not be located at the center of spring 41. In such a case the two spring analogy involves non-identical springs.

In the above case and where perpendicular motion is required, the following condition must be fulfilled:

$$\frac{k}{m\omega^2} = 1 + T^2 \qquad (9)$$

and the amplitude is given by the expression:

$$A = \frac{F}{m\omega^2} T \qquad (10)$$

where $T_1 = T_2 = T$ in a case where there are two springs, equations (1) and (2) above degenerate into the following expressions:

$$\tan\alpha = \frac{T\left[k_1 - k_2\right]\frac{1}{m\omega^2}}{1 - T^2\left[(k_1+k_2)\frac{1}{m\omega^2} - 1\right]} \qquad (11)$$

$$A = \frac{F}{m\omega^2 \cos\alpha} \frac{1}{1 - 2\frac{1 - T\tan\alpha}{1 + T^2}\frac{k_2}{m\omega^2} + \frac{\tan\alpha}{T}} \qquad (12)$$

For pure perpendicular motion these equations further reduce to

$$\left[k_1 + k_2\right]\frac{1}{m\omega^2} = 1 + T^2 \qquad (13)$$

$$A = \frac{F}{m\omega^2} T \frac{1 + T^2}{1 + T^2 - 2\frac{k_2}{m\omega^2}} \qquad (14)$$

Reference is now made to Fig. 3 which illustrates a special case wherein one spring is arranged coaxially with the driving force. In this case equations (1) and (2) become

$$\tan\alpha = \frac{Tk_1/m\omega^2}{1 + T^2(1 - k_1/m\omega^2)} \qquad (15)$$

and

$$A = \frac{F}{m\omega^2 \sin\alpha} \frac{T}{1 + \frac{T}{\tan\alpha}(\frac{k_2}{m\omega^2} - 1)} \qquad (16)$$

The embodiment of Fig. 3 has the following advantages:

1.  It is easy to build a system in which the amplitude A is to mass and wherein the angle is inversely monotonous to m.

2.  It is relatively easy to build since it involves relatively few angularly disposed springs, whose dispositions require precise determination.

3.  It is relatively easy to build a reversible conveyor system in this manner.

If two or more perpendicular motion vibrating systems which satisfy equations (5) and (6) are arranged such that their travel axes lie along tangents to an imaginary circle and coupled together, reciprocal rotational motion can result. As seen in Fig. 4, an electromagnet 40 produces a vibratory force along a driving axis 42. The resultant force is a reciprocal rotational force about axis 42, and indicated by the arrows 44. The angular amplitude is given by the expression:

$$\Psi = A/R \qquad (17).$$

where R is the radius at which the springs support the rotating body. For the mass m in equations (5) and (6) one employs the following expression:

$$m = \frac{J}{n R^2} \qquad (18)$$

where $J$ is the moment of inertia of the body and n is the number of the spring systems employed in association with the body.

It is to be noted that if the vibrating systems do not provide the same amplitude A for the same force then the respective springs must be arranged at differing

- 11 -

radii from the center of rotation of the body in order to produce rotational motion.

It is also noted that since the apparatus of Fig. 4 produces almost no vertical motion, the electromagnet 40 can be designed with a relatively small gap, for increased force output and lower current requirements.

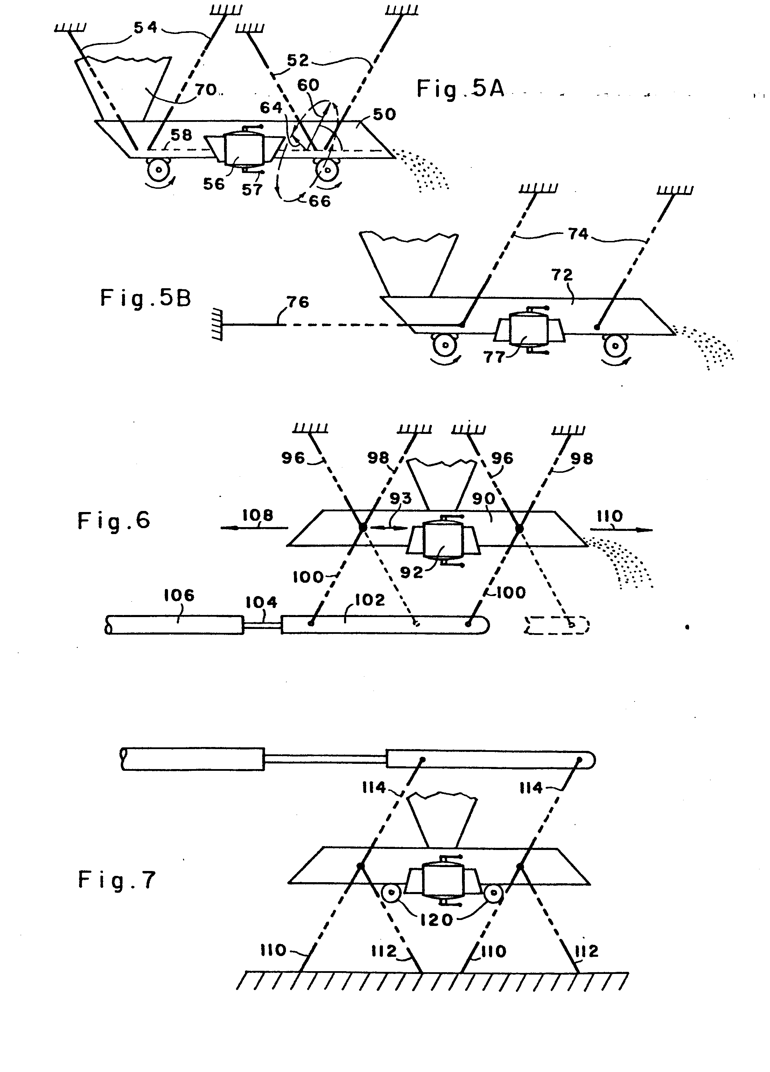

Reference is now made to Figs. 5A and 5B which illustrate conveyors which produce a vibration along an elliptical path. While it is known to produce elliptic motion using a combination of two perpendicularly disposed linear motions of the same frequency and a phase shift of $90^{\circ}$. Circular motion is a special case where the linear motion amplitudes are equal. The embodiments of Figs. 5A and 5B illustrate apparatus constructed in accordance with the present invention for producing elliptical motion in a conveyor.

The conveyor illustrated in Fig. 5A is based on the vibrating system illustrated schematically in Fig. 1 and comprises a trough 50 suspended on first and second spring pairs 52 and 54 whose spring constants and angular dispositions are selected in accordance with equations (1) and (2). Main motors 56 of which there may be one or more on each side of trough 50 are coupled to eccentric weights 57. The eccentric weights on the main motors on opposite sides of the trough are arranged such that operation of the motors produces a reciprocating force along a driving axis 58. In accordance with an embodiment of the invention as set forth with generality in equations (1) and (2), a vibration travel component is produced along a travel axis 60.

Secondary motors 62 are also coupled to the trough 50 and rotate together in a counter-clockwise sense producing elliptic motion including a component of motion perpendicular to travel axis 60, along an axis 64. The resulting motion is along an elliptic path as illustrated by arrows 66. The angle between the driving axis 58 parallel to the trough and the travel axis 60 is desirably greater than zero so as to enable material transfer along a conveyor which is not required to have a downward slope. In the embodiment illustrated in Fig. 5A material supplied through a funnel 70 moves to the right and is released at the right side of the conveyor.

It is noted that although the conveyor apparatus of the invention is being described exemplarily herein with specific reference to troughs, conveyors comprising vibrating screens in place of or in addition to troughs may also be constructed in accordance with the present invention.

Reference is now made to Fig. 5B which illustrates an elliptic motion conveyor comprising a tray and driving mechanism, indicated generally by reference numeral 72, substantially identical to those illustrated in Fig. 5A. Here, however, the tray and driving mechanisms are supported by a single pair of hanging springs 74 and a spring 76 arranged coaxially with the main driving force produced by motors 77. This arrangement operates in accordance with equations (15) and (16). This is a particularly advantageous arrangement since it is relatively easy to maintain the denominator of equation (16) positive such that as the load on the tray increases the amplitude A also increases and the angle α decreases. This behaviour can be realized with reasonable spring rates.

As will be described hereinafter, a reversing conveyor can be realized using this arrangement of springs.

- 13 -

Reference is now made to Fig. 6 which illustrates a reversible direction conveyor constructed and operative in accordance with an embodiment of the present invention. The reversible direction conveyor comprises a tray 90 with associated eccentric drive means 92 producing a sinusoidal force F sin t along an axis 94. The tray is suspended on two pairs of identical hanging springs 96 and 98, each having a spring constant $k_H$. A pair of pivoted springs 100 are coupled at one end to tray 90 at the junctions of spring pairs 96 and 98 and at the other end to a movable support 102 which is coupled to a piston 104 associated with a fluid operated cylinder 106 or other longitudinal driving means. The spring rate of springs 100 is given as $k_p$.

Springs 100 may assume one of two operating orientations. In a first orientation, illustrated in solid lines, the springs 100 are aligned with the axes of springs 98. In the second orientation support 102 is shifted to the right and springs 100 are aligned with springs 96 as illustrated in phantom.

Operation of the conveyor in the illustrated embodiment where 96 and 98 are identical is governed by equations (11) and (12). Where it is required that $k_2$ be greater than $k_1$, the spring constants are chosen as follows:

$$k_1 = k_H$$

$$k_2 = k_H + k_p$$

In this case when the springs 100 are in their first orientation conveying in a direction 108 is produced, and when the springs are in their second orientation, conveying in an opposite direction 110 is produced.

- 14 -

Where it is required that $k_1$ be greater than $k_2$, the spring constants are chosen as follows:

$$k_1 = k_H + k_p$$
$$k_2 = k_H$$

In this case, if the springs 100 are in their first orientation conveying in a direction 110 is produced and when the springs are in their second orientation, conveying in direction 108 is produced.

It is to be appreciated that the direction in which conveying is produced is a function of the angle $\alpha$ between the driving force produced by the eccentric drive means 92 and the travel axis.

It is also noted that the reversing conveyor need not necessarily be constructed with identical springs 96 and 98. If such is not the case, equations (11) and (12) do not govern the operation of the conveyor. Reversible conveying may nevertheless still be realized.

Another embodiment of a reversing conveyor, here supported on supporting springs, is illustrated in Fig. 7.

Referring to the embodiment of Fig. 7 it is seen that supporting spring pairs 110 and 112 are analogous to hanging springs 96 and 98 of Fig. 6; while pivoted springs 114 are analogous to pivoted springs 100 of Fig. 6. The operation of the reversing conveyor is substantially the same as in the embodiment of Fig. 6 described above.

A modified version of the reversing conveyors illustrated in Figs. 6 and 7 may also be provided for elliptic motion. Such a device would also comprise additional motors 120 shown in phantom in Fig. 7 and horizontal shafts for producing elliptic oscillation of the
tray. It is noted that when reversing conveying directions, the direction of rotation of the additional motors
must also be reversed.

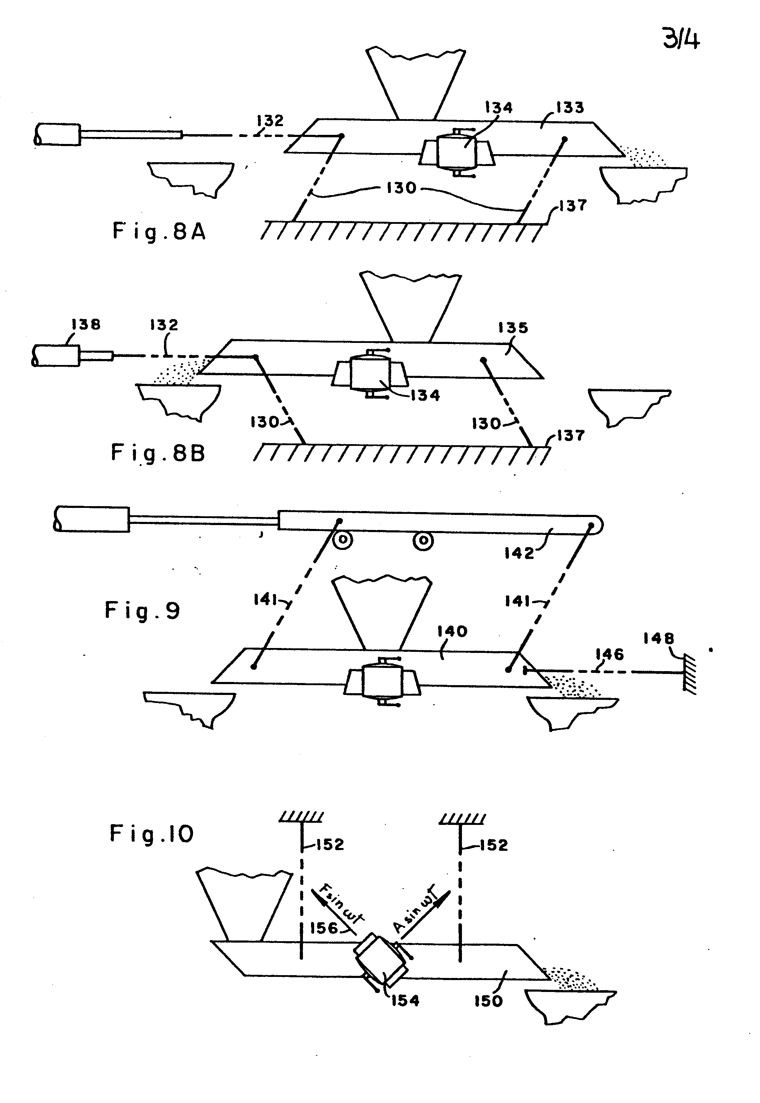

Reference is now made to Figs. 8A and 8B which
show an alternative embodiment of a reversing conveyor
in first and second orientations. The basic principle
here is that the directional orientation of the supporting springs is varied by shifting the position of the
tray supported thereon. By shifting the directional
orientation of the supporting springs, the direction of
conveying is reversed.

The spring arrangement, comprising a single
pair of supporting springs 130 and a spring 132 disposed
coaxial with the driving force produced by driving means
134, is analogous to that illustrated in Fig. 3 and is
governed by equations (15) and (16). Springs 130 are
pivotably mounted at one end onto a tray or trough 135
and at their opposite ends onto a fixed mounting support
137.

When, as in Fig. 8A, the conveyor is shifted
to the right, conveying to the right is produced. If the
conveyor is shifted to the left, as shown in Fig. 8 B,
conveying to the left is produced. Shifting of the conveyor from one orientation to the other is achieved by
the action of a fluid activated cylinder and piston 138
coupled to spring 132 which is in turn mounted onto tray
135. Any other suitable linear displacement means may
alternatively be employed.

An analogous hanging version of the reversible
conveyor of Figs. 8A and 8B is illustrated in Fig. 9.

Here a tray 140 is supported on a single pair of identical hanging springs 141, pivotably mounted at one end thereof to the tray and at their opposite ends to a movable support member 142. Support member 142 is coupled to a linear displacement device 144. Here the position of the tray is not shifted and instead the orientation of the springs is shifted by linear displacement of support member 142. A coaxial spring 146 couples tray 140 to a fixed mounting 148. Operation of the hanging reversible conveyor of Fig. 9 is similar in all relevant respects to that of the embodiment of Figs. 8A and 8B.

Reference is now made to Fig. 10 which shows a conveyor 150 is suspended on a single pair of springs 152. Eccentric driving means 154 are arranged to produce a driving force F sin ωt in a direction 156. Operation of the apparatus is in accordance with equations (7) and (8). Where it is desired that vibration of the conveyor be perpendicular to the axis of the driving force, equations (9) and (10) determine the choice of spring constant. Springs having a high spring rate are required as is a foundation rigid in the vertical direction. Such foundations are normally readily available, in industrial and commercial buildings. The embodiment of Fig. 10 has the disadvantage that α increases with amplitude, which is often intolerable.

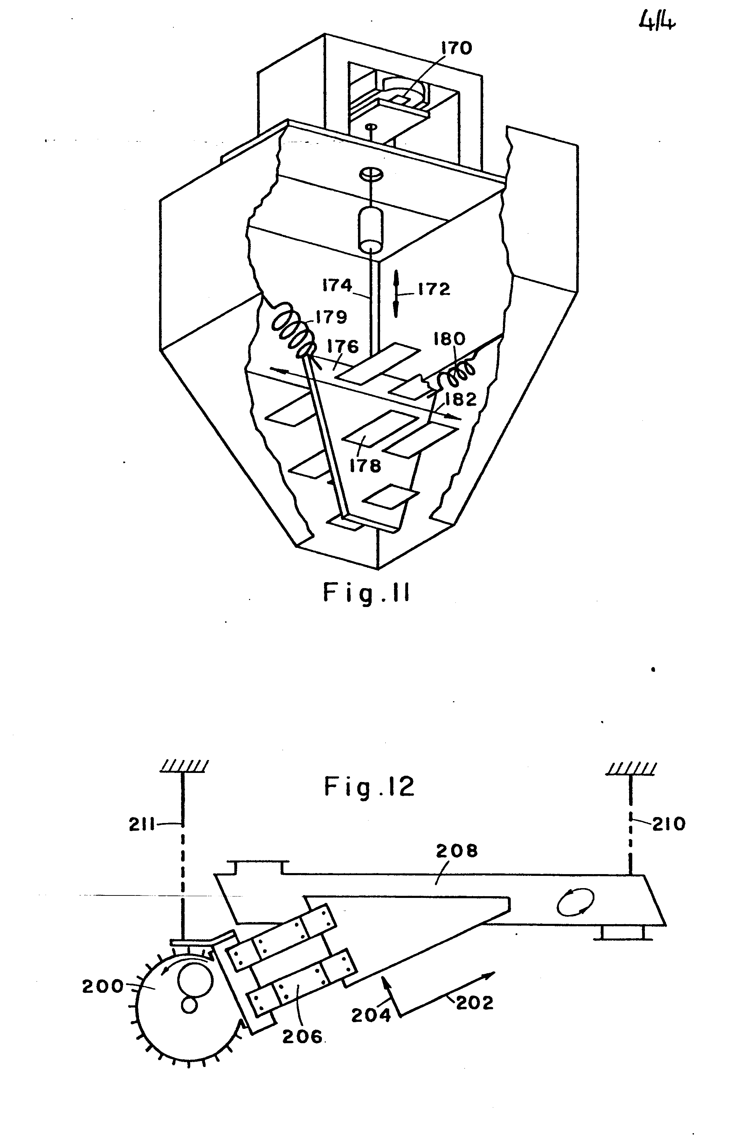

Reference is now made to Fig. 11 which illustrates a bridge breaking device, useful for breaking the bridge or arch formed in a silo outlet impending the free flow of bulk material therethrough. Breaking of the bridge or arch enables flow of the material to be resumed. The bridge breaker illustrated in Fig. 11 comprising a driving source 170, such as an electromagnet which produces a generally vertical force along an axis 172 along a driving rod 174 coupled to a plate 176 onto which are mounted a plurality of blades 178 lying in a plane perpendicular to axis 172. Plate 176 is mounted onto a fixed housing by means of springs 179 and 180.

Efficient bridge breaking action is produced where blades 178 move only along an axis 182 which lies perpendicular to axis 172. Such motion is realized in accordance with the present invention by choosing the spring constants and angular dispositions of springs 179 and 180 to be such that perpendicular motion is produced in accordance with equations (5) and (6).

Reference is now made to Fig. 12 which illustrates an elliptic motion conveyor constructed and operative in accordance with an embodiment of the present invention. Here eccentric driving means 200 produces forces having components both along axes 202 and 204. Driving means 200 is coupled via Kappa springs 206 to a tray 208 which is supported on springs 210 and 211. Kappa springs are described in Israel Patent Application 49583 of the present inventor and are known to be relatively resilient along their main axis and relatively rigid along axes perpendicular thereto. Thus, it may be appreciated that a relatively high amplitude force component is transmitted to the tray along axis 202 while a relatively small amplitude force component is transmitted to the tray along axis 204. As a result of proper selection of the Kappa spring characteristics and disposition elliptical motion having the desired amplitude ratio can be produced in tray 208. It should also be noted that if the horizontal driving means of Figs. 5, 6, 7, 8 and 9 are made vertical, e.g. by turning the motors 90$^{o}$ then the same effects may be obtained.

- 18 -

It will be appreciated by persons skilled in the art that various exemplary embodiments have been present hereinabove solely for the purposes of illustration. The invention is not limited to what has been specifically shown and described hereinabove. Rather the scope of the invention is defined only by the claims which follow:

WHAT WE CLAIM IS:

1.      A vibrating system comprising:

a driven mass m arranged for vibratory motion along a travel axis;

at least one spring of spring constant k coupling said driven mass to a location and extending along a spring axis;

means for applying a driving force F to said driven mass along a driving axis;

the angular relationships between said at least one spring axis, said second and travel axes and the spring constants $k_i$ being determined in accordance with the following expression:

$$\tan \alpha = \frac{\sum \frac{T_i k_i}{1 + T_i^2}}{m\omega^2 - \sum \frac{T_i^2 k_i}{1 + T_i^2}}$$

where $\alpha$  is the angle between said travel axis and said driving axis;

$\gamma_1$ is the angle between said driving axis and a spring axis of index i measured in a uniform driection;

$\omega$  is the frequency of the reciprocating force F;

$k_i$ is the spring constant of a first spring of index i;

$T_i$ is equal to $\tan \gamma_1$  .

2. Apparatus according to Claim 1 and wherein the amplitude of vibration is given by the following expression:

$$A = \frac{F}{m\omega^2 \cos\alpha} \times \frac{1}{1 - \left\{ \tan\alpha \sum \left[ \frac{k_i}{m\omega^2} \frac{T_i}{1 + T_i^2} \right] \sum \left[ \frac{k_i}{m\omega^2} \frac{1}{1 + T_i^2} \right] \right\}}$$

3. A reversing conveyor comprising the vibrating system of either of Claims 1 and 2 and wherein said driven mass includes a conveyor surface and also comprising means for varying the orientation of at least one spring axis from a first orientation producing conveying along said surface in a first direction by vibration of said conveyor surface along a first travel axis to a second orientation producing conveying along said surface in a second direction by vibration of said conveyor surface along a second travel axis.

4. A vibrating system producing elliptic motion comprising apparatus according to any of the preceding Claims and also comprising means for applying a second driving force to said driven mass along a second driving axis angled with respect to said driving axis.

5. Apparatus according to any of the preceding Claims and wherein said at least one spring comprises a single of spring constant k and

$$\tan\alpha = \frac{Tk/m\omega^2}{1 + T^2(1 - k/m\omega^2)}$$

$$A = \frac{F}{m\omega^2 \sin\alpha} \frac{T}{1 - T/\tan\alpha}$$

6.     Apparatus according to any of the preceding Claims and wherein $\alpha = 90^{\circ}$.

7.     Apparatus according to any of Claims 1-4 and 6 and wherein said at least one spring comprises a plurality of springs.

8.     Apparatus according to Claim 7 and wherein all $\gamma_1$ are equal.

9.     Apparatus according to any of the preceding Claims and wherein said at least one spring comprises a spring for which $T = 0$.

10.    A vibrating system for producing perpendicular rotational motion and comprising at least two of the systems of Claim 1 disposed on a circle such that their travel axes are perpendicular to each other, in the plane of the circle.

11.    A vibrating system according to any of the preceding Claims wherein said driven mass includes a conveyor tray.

12.    Apparatus according to any of the preceding Claims 1-10 and wherein said driven mass comprises at least one bridge breaker blades arranged for vibratory motion perpendicular to said driving axis.

13.    Apparatus according to any of the preceding Claims wherein an increase in said driven mass results in an increase in amplitude A and a decrease in angle $\alpha$ .

14.    Apparatus according to any of the preceding Claims and also comprising means for shifting the orientation of said at least one spring, thereby to shift said spring axis and to shift said travel axis.

15.  Apparatus according to Claim 14 and wherein said shifting means comprises linear displacement means onto which is pivotably coupled said at least one spring.

16.  A reversible vibrating conveyor according to Claim 14 of 15.

17.  A reversible vibrating conveyor operative in elliptical motion according to Claim 14 or 15 and 4:

18.  Apparatus according to any of the preceding Claims wherein said at least one spring comprises at least one hanging spring.

19.  Apparatus according to any of Claims 1-17 wherein said at least one spring comprises at least one support spring.

20.  A conveyor system producing elliptical motion comprising:

a conveyor tray;

means for producing elliptic motion;

kappa spring means arranged along a first axis for coupling said means for producing elliptic motion to said conveyor tray such that the major axis of said elliptic motion is along said first axis and the minor axis of said elliptic motion is along an axis perpendicular to said first axis.

Fig.1

Fig.2

Fig.3

Fig.4

Fig.5A

Fig.5B

Fig.6

Fig.7

Fig.8A

Fig.8B

Fig.9

Fig.10

Fig.11

Fig.12

European Patent Office

**EUROPEAN SEARCH REPORT**

Application number

EP 79 30 1336

| DOCUMENTS CONSIDERED TO BE RELEVANT | | |
|---|---|---|
| Category | Citation of document with indication, where appropriate, of relevant passages | Relevant to claim |
| | DE - B - 1 091 035 (UHDE) <br> * Column 4; column 5, lines 1-47; figures * | 1,2,4, 5,11, 13 |
| | -- | |
| | GB - A - 796 161 (G.E.C.) <br> * Page 1, lines 74-82; page 2, figures * | 1-3,7,8 11,14, 17,19, 20 |
| | ---- | |

**CLASSIFICATION OF THE APPLICATION (Int. Cl.³)**

B 65 G 27/32
B 06 B 1/10

**TECHNICAL FIELDS SEARCHED (Int.Cl.³)**

B 06 B 1/00
B 65 G 27/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 02-10-1979 | FLORES |

EPO Form 1503.1 06.78